Europäisches Patentamt

European Patent Office

Office européen des brevets

(11) Veröffentlichungsnummer : **0 201 530 B1**

(12) **EUROPÄISCHE PATENTSCHRIFT**

(45) Veröffentlichungstag der Patentschrift :
20.09.89

(51) Int. Cl.⁴ : **B 29 C 53/04, B 31 F 1/00// B29L9/00**

(21) Anmeldenummer : 85905306.8

(22) Anmeldetag : 14.10.85

(86) Internationale Anmeldenummer :
PCT/AT 85/00039

(87) Internationale Veröffentlichungsnummer :
WO/8602314 (24.04.86 Gazette 86/09)

(54) VERFAHREN ZUM HEISSVERFORMEN EINER KUNSTHARZ-SCHICHTPRESSTOFFPLATTE, SOWIE VORRICHTUNG ZUR DURCHFÜHRUNG DIESES VERFAHRENS.

(30) Priorität : 12.10.84 AT 3249/84

(43) Veröffentlichungstag der Anmeldung :
20.11.86 Patentblatt 86/47

(45) Bekanntmachung des Hinweises auf die Patenterteilung : 20.09.89 Patentblatt 89/38

(84) Benannte Vertragsstaaten :
AT BE CH DE FR GB IT LI NL SE

(56) Entgegenhaltungen :
DE–A– 2 823 669
GB–A– 1 388 710
GB–A– 2 071 541
US–A– 2 937 689
US–A– 3 009 201

(73) Patentinhaber : ISOVOLTA Österreichische Isolierstoffwerke Aktiengesellschaft
Industriezentrum-Süd
A-2351 Wiener Neudorf (AT)

(72) Erfinder : PETERSHOFER, Georg
Hauptstrasse 26/B8
A-2351 Wiener Neudorf (AT)

(74) Vertreter : Stampfer, Heinz
ISOVOLTA Österreichische Isolierstoffwerke AG
Industriezentrum-Süd
A-2351 Wiener Neudorf (AT)

## Beschreibung

Die Erfindung betrifft ein Verfahren zum Heißverformen einer Kunstharz-Schichtpreßstoffplatte, welche aus mehreren heißverformbaren, einen duromeren Kunststoff und flächige Trägermaterialien enthaltenden Laminatschichten aufgebaut ist, zwischen denen Schichten aus einem thermoplastischen Bindemittel eingefügt sind, bei welchem Verfahren die Platte zunächst zumindest in ihrem zu verformenden Bereich auf Verformungstemperatur gebracht wird, die gleich der oder höher als die Schmelztemperatur des thermoplastischen Bindemittels ist, und sie hierauf zum Abwinkeln eines in seiner endgültigen Form ebenen Platten-Randbereiches mit Hilfe einer beweglich geführten Biegeplatte um eine zylindrische Fläche gebogen und abgekühlt wird, derart, daß die Biegeplatte zumindest während eines großen Teiles des Abbiegevorganges mit dem abzuwinkelnden Platten-Randbereich in flächigem Kontakt steht und die einzelnen Laminatschichten sich in dem Biegebereich und dem Randbereich in Richtung der Plattenoberfläche gegeneinander verschieben, und wobei die Biegeplatte nach dem Abbiegevorgang zumindest bis zum Wiedererstarren des thermoplastischen Bindemittels den Randbereich in seiner abgewinkelten Lage hält. Die Erfindung betrifft ferner eine Vorrichtung zur Durchführung des erfindungsgemäßen Verfahrens.

Kunstharz-Schichtpreßstoffplatten der vorstehend genannten Art sowie Verfahren zum Heißverformen solcher Platten sind aus der DE-PS 28 23 669 bekannt. Bei diesem bekannten Verfahren führt die Biegeplatte während des Abbiegevorganges eine Drehbewegung um eine Achse aus, die mit der Achse der zylindrischen Fläche, um die die Platte gebogen wird, übereinstimmt, wobei die Biegeplatte relativ zur Oberfläche des abzuwinkelnden Platten-Randbereiches, mit der sie in ständigem flächigem Kontakt steht, eine Gleitbewegung ausführt. Die bei dieser Gleitbewegung an der Oberfläche des abzuwinkelnden Platten-Randbereiches angreifenden Reibungskräfte wirken, wie die Anmelderin später erkannt hat, einer Tendenz der Platte im Biegebereich an den Biegemittelfugen aufzutrennen, entgegen. Diesem Auftrennen wirken bei den genannten bekannten Verfahren ferner auch Formhalteorgane entgegen, die nach dem Abbiegevorgang den Biegebereich bzw. den Randbereich zumindest bis zum Wiedererstarren des Bindemittels in seiner gebogenen bzw. abgewinkelten Form halten. Als Formhalteorgan dient z. B. ein leistenförmiger Preßstempel mit konkaver zylindrischer Preßfläche, der nach dem Abbiegevorgang gegen die konvexe Oberfläche des gebogenen Plattenbereichs gedrückt wird.

Die Erfahrung hat nun gezeigt, daß bei den genannten bekannten Verfahren die Preßfläche der Formhalteorgane sehr genau an die im Biegebereich konvex gekrümmte Plattenoberfläche angepaßt sein muß. Bei größeren Dickentoleranzen der Platte besteht die Gefahr, daß bei einer größeren Dickenabweichung nach oben sich die Ränder der Formhalteorgan-Preßfläche in ungewünschter Weise an der Plattenoberfläche abdrücken. Außerdem ist für jeden Biegeradius und jede Plattendicke ein eigenes Formhalteorgan erforderlich.

Hier will die Erfindung Abhilfe schaffen. Die Erfindung, wie sie in den Verfahrensansprüchen gekennzeichnet ist, löst die Aufgabe, ein Verfahren zum Heißverformen von Kunstharz-Schichtpreßstoffplatten der eingangs genannten Art anzugeben, bei dem man ohne die Anwendung spezieller, an die konvex gekrümmte Plattenoberfläche angepaßte Formorgane auskommt. Die Erfindung betrifft ferner eine Vorrichtung zur Durchführung des erfindungsgemäßen Verfahrens, wie sie in den Vorrichtungsansprüchen gekennzeichnet ist.

Eine Biegevorrichtung zum Herstellen von Kunststoffplatten, die ohne an die konvex gekrümmte Oberfläche der gebogenen Platte angepaßte Formorgane auskommt, ist zwar aus der US-A-3.009.201 bekannt, doch weist diese Biegevorrichtung als Hauptbiegeorgan keine Biegeplatte sondern Rollen auf, die auf dem zu biegenden plattenförmigen Material, das aus thermoplastischem Kunststoff besteht, abrollen.

Die Erfindung wird nachstehend im Zusammenhang mit einem bevorzugten Ausführungsweg näher erläutert.

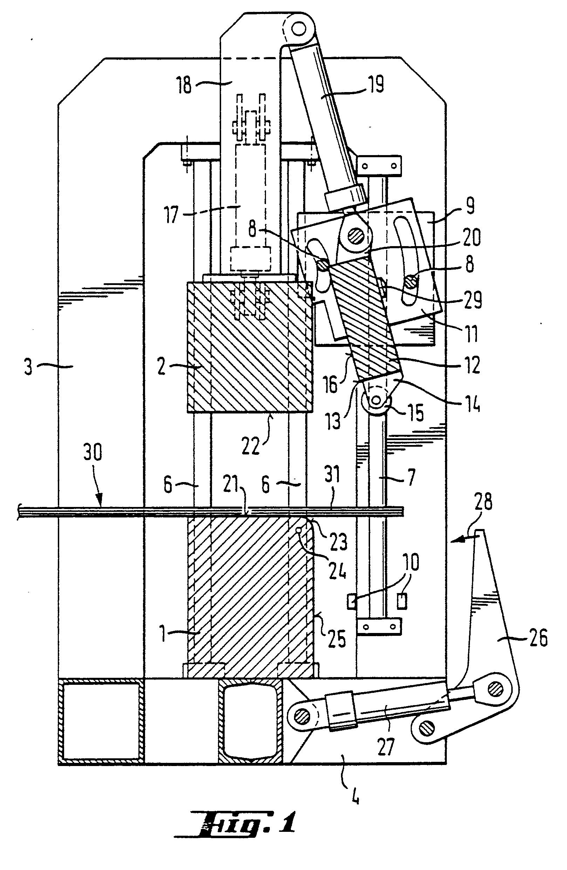

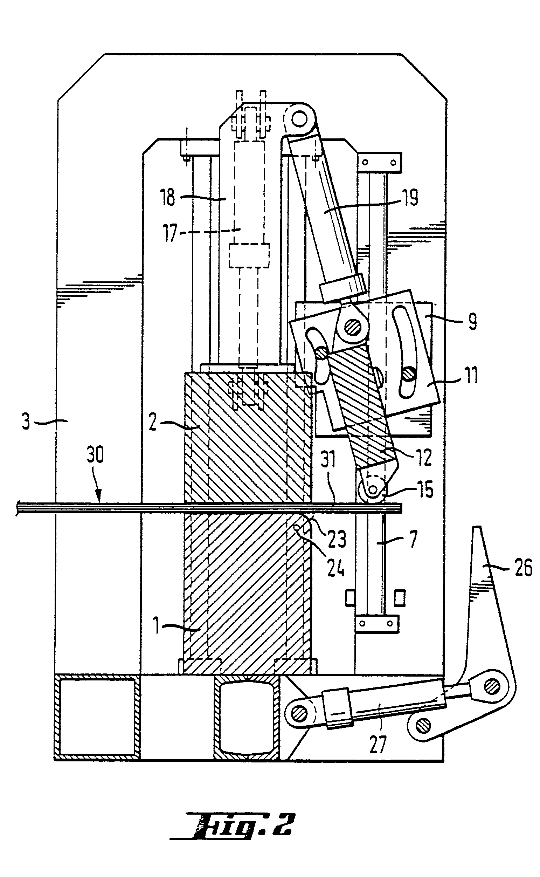

Die Fig. 1 zeigt eine vorteilhafte Realisierung der erfindungsgemäßen Vorrichtung zur Durchführung des erfindungsgemäßen Verfahrens schematisch in Schnitt, die Figuren 2 bis 4 diese Vorrichtung in drei verschiedenen Phasen des erfindungsgemäßen Verfahrens zum Heißverformen einer Kunstharz-Schichtpreßstoffplatte.

Die Vorrichtung, die in Fig. 1 in ihrer Ruhestellung gezeigt ist, ist im wesentlichen symmetrisch zur Zeichnungsebene aufgebaut. Sie weist eine Klemmvorrichtung nach Art einer Oberkolbenpresse auf, mit zwei Klemmbalken 1 und 2, deren Längserstreckung senkrecht zur Zeichnungsebene verläuft. Der untere Klemmbalken 1 ist in einem Maschinengestell montiert, das im wesentlichen aus zwei an beiden Enden der Klemmbalken 1, 2 angeordneten Rahmen 3 besteht, die durch einen Basisrost 4 mit Holmen 5 miteinander verbunden sind. An jedem der beiden Rahmen 3 sind nun zwei Führungssäulen 6 zur Führung des oberen, vertikal verstellbaren Klemmbalkens 2 und eine Führungssäule 7 zur Führung einer mit Kulissensteinen 8 versehenen Lagerplatte 9, deren Vertikalbewegung nach unten durch Anschläge 10 begrenzt ist, angeordnet. Beide Lagerplatten 9 bilden einen vertikal verschiebbaren Schlitten.

An den Kulissensteinen 8 der Lagerplatten 9 sind Kulissenplatten 11 drehbar gelagert. Die beiden Kulissenplatten 11 sind durch eine mit ihrer Längserstreckung senkrecht zur Zeich-

nungsebene verlaufende, balkenförmige Biege-platte 12 verbunden. Nahe der unteren Biegeplatten-Längskante 13 sind in mehreren längs der Biegeplatte 12 angeordneten Lagerböcken 14 als Vorbiegeorgan dienende Walzen 15 drehbar gelagert, derart, daß die Walzen-Mantelflächen etwas über die Ebene der Biegeplatten-Druckfläche 16 herausstehen, was bedeutet, daß die Ebene dieser Druckfläche 16 die Körper dieser Walzen 15 schneidet.

Zur Bewegung des oberen Klemmbalkens 2 dienen zwei zwischen den beiden Rahmen 3 und dem oberen Klemmbalken 2 wirkende hydraulische Verstelleinrichtungen 17. An der Oberseite des oberen Klemmbalkens sind ferner zwei Steher 18 montiert, die jeweils an ihren oberen Enden mit dem einen Ende von hydraulischen Verstelleinrichtungen 19 drehbar verbunden sind, während die anderen Enden dieser Verstelleinrichtungen 19 an Lagerböcken 20 drehbar gelagert sind, die mit der Biegeplatte 12 verbunden sind.

Die Klemmbalken 1, 2 weisen ebene Klemmflächen 21, 22 auf, wobei die Klemmfläche 21 des unteren Klemmbalkens 1 über eine kreiszylindrische Biegefläche 23, deren Achse mit 24 angedeutet ist, in eine gegenüber dieser Klemmfläche 21 um 90° abgewinkelte Gegendruckfläche 25 übergeht. Die Klemmflächen 21, 22, die Biegefläche 23 und die Gegendruckfläche 25 werden mit Hilfe eines Kühlmediums gekühlt, welches in geeigneten, in den Klemmbalken 1, 2 angeordneten Kühlkanälen zirkuliert, die zur besseren Übersichtlichkeit in den Figuren nicht dargestellt sind.

Die Vorrichtung enthält ferner noch eine Anpreßvorrichtung bestehend aus zwei am Basisrost 4 drehbar gelagerten Anpreßhebeln 26, die jeweils mit Hilfe von zwischen dem Basisrost 4 und den Anpreßhebeln 26 wirkenden hydraulischen Verstelleinrichtungen 27 aus der in Fig. 1 gezeigten Ruhestellung in Richtung des Pfeiles 28 bewegt werden können und die dazu bestimmt sind, mit den Anschlägen 29 zusammenzuarbeiten, die an der Rückseite der Biegeplatte 12 angeordnet sind.

Zur Durchführung des Verfahrens zum Abwin-keln des Randbereiches einer Kunstharz-Schichtpreßstoffplatte, wie sie in der DE-PS 28 23 669 beschrieben ist, wird die Platte 30 zunächst in einer gesonderten Vorrichtung auf die Verformungstemperatur von etwa 160-170 °C gebracht und danach auf die Klemmfläche 21 des unteren Klemmbalkens 1 so aufgelegt, daß sie — wie in Fig. 1 ersichtlich — mit ihrem abzubiegenden bzw. abzuwinkelnden Randbereich 31 über den Rand des Klemmbalkens 1 hinausragt. Danach wird durch Betätigung der hydraulischen Verstelleinrichtungen 17 der obere Klemmbalken 2 abgesenkt und die Platte 30 zwischen den beiden Klemmbalken 1, 2 festgeklemmt (siehe Fig. 2). Dabei wird gemeinsam mit dem oberen Klemmbalken 2 auch das mit diesem über die Konsolen 18 und die hydraulischen Verstelleinrichtungen 19 verbundene, aus Lagerplatten 9, Kulissenplatten 11, der Biegeplatte 12 und den Walzen 15 bestehende und an den Führungssäulen 7 vertikal verschiebbare Aggregat mit abgesenkt, derart, daß in der in Fig. 2 dargestellten Phase des erfindungsgemäßen Verfahrens die als Vorbiegeorgan dienenden Walzen 15 den abzuwinkelnden Platten-Randbereich 31 berühren.

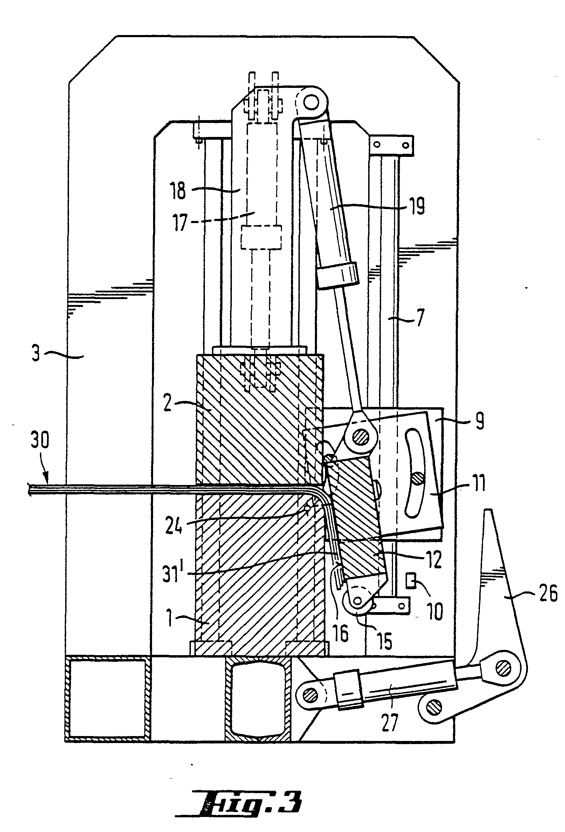

Anschließend werden nun die hydraulischen Verstelleinrichtungen 19 betätigt, wodurch die Biegeplatte 12 samt den an den Führungssäulen 7 geführten Lagerplatten 9 und den mit der Biegeplatte 12 verbundenen Walzen 15 weiter abgesenkt wird und die Walzen 15 dabei die Platte 30 über die kreiszylindrische Biegefläche 23, deren Radius sich z. B. auf 30 mm beläuft, vorbiegen, wobei die Walzen 15 an der Plattenoberfläche abrollen, bis danach die Biegeplatten-Druckfläche 16 mit dem vorgebogenen Platten-randbereich 31' (siehe Fig. 3) in Kontakt kommt. Im Laufe des weiteren Vorschubes der hydraulischen Verstelleinrichtungen 19 liegt diese Biegeplatten-Druckfläche 16 unter Druck an dem Platten-Randbereich 31 an, wobei sie an der Randbereichoberfläche entlang gleitet und dort — infolge der Gleitreibung — auf die oberste Laminatschicht der Platte eine Kraft in Richtung auf den Plattenrand zu ausübt, wodurch ein Auftrennen der Platte an den Bindemittelfugen verhindert wird.

Mit Eintritt des flächigen Kontaktes zwischen der Biegeplatten-Druckfläche und dem vorgebogenen Platten-Randbereich 31' wird der vertikalen Translationsbewegung der Biegeplatte 12 eine Drehbewegung überlagert, wobei das Verhältnis zwischen Translations- und Drehbewegung sich ganz automatisch daraus ergibt, daß die Biegeplatten-Druckfläche 16 ständig im flächigen Kontakt mit dem abzuwinkelnden Platten-Randbereich steht. Fig. 3 zeigt die Stellung der Vorrichtung während dieser Phase des Abbiegevorganges.

Während des weiteren Vorschubes der Verstelleinrichtungen 19 wird zunächst die vertikale Translationsbewegung der Biegeplatte 12 dadurch gestoppt, daß die Lagerplatten 9, an denen die Biegeplatte 12 drehbar gelagert ist, auf die Anschläge 10 auflaufen und der weitere Vorschub der Verstelleinrichtungen 19 nunmehr ausschließlich zur Fortsetzung der Drehbewegung der Biegeplatte 12 dient.

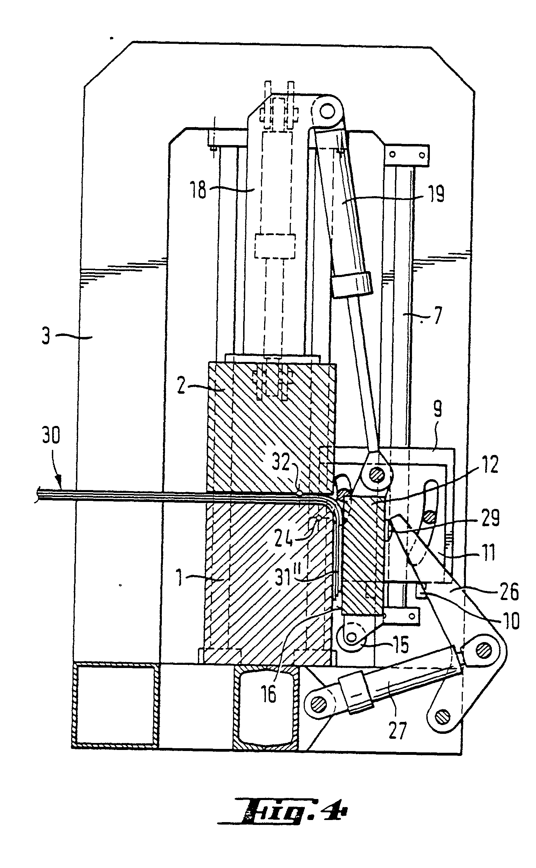

In dieser letzten Phase des Abbiegevorganges führt die Biegeplatte dann also eine reine Drehbewegung um eine Achse 32 aus (siehe Fig. 4), die in etwa in jener Oberfläche des unverformten Plattenbereiches liegt, welche in die konvexe Oberfläche des gebogenen Plattenbereichs übergeht und deren Abstand von der Ebene der äußeren Oberfläche des abgewinkelten Platten-Randbereichs größer ist als der Abstand dieser Ebene von der Biegeflächenachse 24. Daraus ergibt sich, daß auch in dieser letzten Phase des Abbiegevorganges jeder Punkt der Biegeplatten-Druckfläche 16, insbesondere auch knapp bevor die Biegeplatte am Ende des Abbiegevorganges zur Ruhe kommt, eine wesentliche Bewegungskomponente in Richtung parallel zur Ebene des abgewinkelten Randbereiches 31'' (siehe Fig. 4) aufweist, was bedeutet, daß auch unmittelbar vor Beendigung des Abbiegevorganges die Biegeplatten-Druckfläche 16 und die Oberfläche des vorgebogenen Platten-Randbereiches 31' aneinander gleiten und die infolge der Gleitreibung auf die oberste Laminatschicht in Richtung der Laminatoberfläche wirkenden Kräfte ein Auftrennen der Platte an ihren Bindemittelfugen verhindern.

Zur Unterstützung des Antriebs der Drehbewegung der Biegeplatte 12 während dieser letzten Phase des Abbiegevorganges 9 werden unmittelbar nach dem Auflaufen der Lagerplatten 9 an den Anschlägen 10 die hydraulischen Verstelleinrichtungen 27 betätigt, welche die Anpreßhebel 26 gegen die an der Rückseite der Biegeplatte 12 angebrachten Anschläge 29 drücken und die Biegeplatte 12 — nach Beendigung ihrer Drehbewegung während einer Wiedererstarrungsperiode für die Bindemittelfugen an den abgewinkelten Platten-Randbereich 31" pressen (siehe Fig. 4).

Je nach Dicke der zu verformenden Platte dauert der Abbiegevorgang zwischen 5 und 15 s, die Wiedererstarrungsperiode zwischen 4 und 6 min.

Die mit Hilfe des erfindungsgemäßen Verfahrens sowie der erfindungsgemäßen Vorrichtung hergestellten gebogenen Kunstharz-Schichtpreßstoffplatten werden vor allem als selbsttragende, mit dekorativen Oberflächen versehene Plattenteile vor allem für Möbel und den Innenausbau von Räumen, insbesondere für Spitäler, Naßzellen und Sanitärkabinen, eingesetzt.

## Patentansprüche

1. Verfahren zum Heißverformen einer Kunstharz-Schichtpreßstoffplatte (30), welche aus mehreren heißverformbaren, einen duromeren Kunststoff und flächige Trägermaterialien enthaltenden Laminatschichten aufgebaut ist, zwischen denen Schichten aus einem thermoplastischen Bindemittel eingefügt sind, bei welchem Verfahren die Platte (30) zunächst zumindest in ihrem zu verformenden Bereich auf Verformungstemperatur gebracht wird, die gleich der oder höher als die Schmelztemperatur des thermoplastischen Bindemittels ist, und sie hierauf zum Abwinkeln eines in seiner endgültigen Form ebenen Platten-Randbereiches (31) mit Hilfe einer mit diesem Randbereich (31) in Kontakt tretenden, beweglich geführten Biegeplatte (12) um eine zylindrische Fläche (23) gebogen und abgekühlt wird, derart, daß die Biegeplatte (12) zumindest während eines großen Teiles des Abbiegevorganges mit dem abzuwinkelnden Platten-Randbereich (31') in flächigem Kontakt steht und die einzelnen Laminatschichten sich in dem Biegebereich und dem Randbereich in Richtung der Plattenoberfläche gegeneinander verschieben, und wobei die Biegeplatte (12) nach dem Abbiegevorgang zumindest bis zum Wiedererstarren des thermoplastischen Bindemittels den Randbereich (31") in seiner abgewinkelten Lage hält, dadurch gekennzeichnet, daß in einer letzten Phase des Abbiegevorganges die Biegeplatte (12) ständig so geführt wird, daß jeder Punkt ihrer Biegefläche (16) eine wesentliche, auf die freie Kante des abgewinkelten Randbereiches (31") hin gerichtete und zur Ebene dieses abgewinkelten Randbereiches (31") parallele Bewegungskomponente aufweist, und daß gegebenenfalls ein mit der Biegeplatte (12) verbundenes Vorbiegeorgan vorgesehen wird, welches bei seiner Bewegung während einer ersten Phase des Biegevorganges gegen den abzuwinkelnden Platten-Randbereich (31) drückt und diesen dabei vorbiegt.

2. Verfahren nach Anspruch 1, dadurch gekennzeichnet, daß die in einem letzten Teil des Abbiegevorganges von der Biegeplatte (12) ausgeführten Bewegung eine Drehbewegung ist.

3. Verfahren nach Anspruch 2, dadurch gekennzeichnet, daß bei der Drehbewegung der Biegeplatte (12) ein Drehwinkel zwischen 15 und 45° zurückgelegt wird.

4. Verfahren nach Anspruch 2 oder 3, dadurch gekennzeichnet, daß dieser Drehbewegung während einer Anfangsphase der Drehbewegung eine Translationsbewegung in einer zur Ebene des abgewinkelten Platten-Randbereiches (31") zumindest nahezu parallelen Richtung überlagert wird.

5. Verfahren nach einem der Ansprüche 2 bis 4, dadurch gekennzeichnet, daß beim Abwinkeln des Platten-Randbereiches (31) um etwa 90° die Drehbewegung zumindest in einer Endperiode dieser Drehbewegung um eine Drehachse (32) erfolgt, deren Abstand von der Ebene jener Oberfläche des unverformten Plattenbereiches, welche in die konvexe Oberfläche des gebogenen Plattenbereiches übergeht, kleiner ist als die Hälfte des Abstandes dieser Ebene von der Biegeflächenachse (24) und deren Abstand von der Ebene der äußeren Oberfläche des abgewinkelten Platten-Randbereichs (31") größer ist als das Doppelte des Abstandes dieser Ebene von der Biegeflächenachse (24).

6. Verfahren nach einem der Ansprüche 1 bis 5, dadurch gekennzeichnet, daß das Vorbiegeorgan während seines Eingriffs mit dem abzuwinkelden Platten-Randbereich (31) eine Translationsbewegung in einer zur Ebene des abgewinkelten Platten-Randbereiches (31") zumindest nahezu parallelen Richtung ausführt.

7. Vorrichtung zum Biegen von Platten, die eine zum Festhalten der unverformten Platte (30) dienende Klemmvorrichtung mit ebenen Klemmflächen aufweist, wobei eine der ebenen Klemmflächen über eine gegebenenfalls kreiszylindrische Biegefläche (23) in die gegenüber dieser Klemmfläche abgewinkelte Gegendruckfläche (25) übergeht, sowie eine über eine Halterung drehbar gelagerte, eine Druckfläche aufweisende Biegeplatte (12) mit einem Verstellorgan, insbesondere geeignet zur Durchführung des Verfahrens nach einem der Ansprüche 1 bis 6, gekennzeichnet durch einen in Richtung zumindest nahezu parallel zur Gegendruckfläche (25) verstellbaren Schlitten oder Wagen, in dem die Biegeplattenhalterung drehbar gelagert ist, durch ein oder mehrere Verstellorgane zum Verstellen des Schlittens oder Wagens und gegebenenfalls durch eine besondere Anpreßvorrichtung zum Anpressen der Biegeplatte (12) an den ebenen abgewinkelten Platten-Randbereich (31″).

8. Vorrichtung nach Anspruch 7, dadurch gekennzeichnet, daß an der Biegeplatte (12) oder deren Halterung ein gegebenenfalls als zylindrischer Körper ausgebildetes Vorbiegeorgan befestigt oder gelagert ist.

9. Vorrichtung nach Anspruch 7 oder 8, dadurch gekennzeichnet, daß das Verstellorgan für die Biegeplatte (12) durch eine an der Biegeplatte (12) oder deren Halterung angreifende hydraulische Verstelleinrichtung (19) gebildet ist, die der Biegeplatte (12) gegen den Widerstand des abzuwinkelnden Platten-Randbereiches (31) eine Translations- und/oder Drehbewegung aufzwingt.

10. Vorrichtung nach Anspruch 9, gekennzeichnet durch einen Anschlag (10) zur Begrenzung der Translationsbewegung des Schlittens oder Wagens, der noch vor Abschluß der Drehbewegung wirksam wird.

11. Vorrichtung nach einem der Ansprüche 9 oder 10 zum Abwinkeln eines Platten-Randbereiches um 90° mit einem in Richtung zumindest nahezu parallel zur Gegendruckfläche verschiebbaren, eine der Klemmflächen aufweisenden Klemmorgan, dadurch gekennzeichnet, daß die an der Biegeplatte (12) oder deren Halterung angreifende hydraulische Verstelleinrichtung (19) sich an dem verschiebbaren Klemmorgan abstützt.

12. Vorrichtung nach einem der Ansprüche 8 bis 11, dadurch gekennzeichnet, daß das Vorbiegeorgan durch eine oder mehrere an der Biegeplatte (12) oder deren Halterung drehbar gelagerten Rollen oder Walzen (15) gebildet ist.

13. Vorrichtung nach Anspruch 12, dadurch gekennzeichnet, daß die Ebene der Druckfläche (16) der Biegeplatte (12) den oder die Körper des Vorbiegeorgans schneidet.

## Claims

1. A method for hot-forming a laminated sheet of synthetic resin (30) which is composed of several hot-formable laminate layers containing a duromer plastic and planar carrier materials, between which layers are inserted layers of a thermoplastic bonding agent, in which method the sheet (30), in at least its region which is to be deformed, is first heated to the forming temperature which is equal to or higher than the melting temperature of the thermoplastic bonding agent, whereupon, for the purpose of bending a border region (31) of the sheet which in its final form is flat, it is bent around a cylindrical surface (23) with the aid of a movably guided bending plate (12), which comes into contact with said border region (31), and said sheet is cooled, in such a manner that at least during a large part of the bending operation the bending plate (12) will be in planar contact with the border region of the sheet (31′) which is to be bent, and the individual laminate layers are mutually displaced in the bending region and in the border region in the direction of the surface of the sheet, and whereby, after the bending operation, the bending plate (12) holds the border region (31″) in its bent position at least until the resolidification of the thermoplastic bonding agent, characterised in that in a last phase of the bending operation the bending plate (12) is constantly guided in such a manner that each point of its bending surface (16) has an essential component of motion which is directed towards the free edge of the bent border region (31″) and is parallel to the plane of said bent border region (31″), and that, appropriately, a pre-bending element is provided connected with the bending plate (12), which in its movement during a first phase of the bending operation presses against the border region (31) of the sheet to be bent and thereby pre-bends it.

2. A method according to Claim 1, characterised in that the movement executed by the bending plate (12) in a last portion of the bending operation is a rotary movement.

3. A method according to Claim 2, characterised in that during the rotary movement of the bending plate (12), an angle of rotation between 15 and 45° is covered.

4. A method according to Claim 2 or 3, characterised in that during an initial phase of the rotary movement a translational movement is superimposed on this rotary movement in a direction at least nearly parallel to the plane of the bent border region (31″) of the sheet.

5. A method according to one of Claims 2 to 4, characterised in that, during the bending of the border region (31) of the sheet by about 90°, the rotary movement takes place at least during a final period of this rotary movement about an axis of rotation (32), the distance of which from the plane of that surface of the un-deformed region of the sheet which changes into the convex surface of the bent sheet region is smaller than half the distance of this plane from the bending surface axis (24), and the distance of which from the plane of the outer surface of the bent border region (31″) of the sheet is greater than double the distance of this plane from the bending surface axis (24).

6. A method according to one of Claims 1 to 5, characterised in that the pre-bending element performs a translational movement during its engagement with the border region (31) of the sheet which is to be bent in a direction at least nearly parallel to the plane of the bent border region (31″) of the sheet.

7. A device for bending sheets, which has a clamping device with flat clamping surfaces serving to hold the un-deformed sheet (30), with one of the flat clamping surfaces changing over into the counterpressure surface (25) that is bent against this clamping surface, by way of an appropriately circular-cylindrical bending surface (23), and which also has a bending plate (12) which is pivoted on a mounting and has a pressure surface and an adjusting mechanism, particularly suitable for performing the method according to one of Claims 1 to 6, characterised by a cradle or sliding carriage which is adjustable in the direction that is at least nearly parallel to the counterpressure surface (25), in which cradle or sliding carriage the bending plate mounting is pivoted, by one or more adjusting mechanisms to adjust the cradle or sliding carriage, and appropriately by a special pressure mechanism for pressing the bending plate (12) against the flat, bent border region (31") of the sheet.

8. A device according to Claim 7, characterised in that a pre-bending element appropriately shaped as a cylindrical body is attached or mounted on the bending plate (12) or on its mounting.

9. A device according to Claim 7 or 8, characterised in that the adjusting element for the bending plate (12) is formed by a hydraulic adjusting mechanism (19) engaging the bending plate (12) or its mounting, which imposes a translational and/or rotary movement on the bending plate (12) against the resistance of the border region (31) of the sheet which is to be bent.

10. A device according to Claim 9, characterised by a stop (10) for defining the translational movement of the cradle or sliding carriage, which is actuated even before the end of the rotary movement.

11. A device according to one of Claims 9 or 10 for bending a border region of a sheet by 90° with a clamping element having one of the clamping surfaces that is displaceable in a direction at least approximately parallel to the counterpressure surface, characterised in that the hydraulic adjusting mechanism (19) engaging at the bending plate (12) or its mounting is supported by the displaceable clamping element.

12. A device according to one of Claims 8 to 11, characterised in that the pre-bending element is formed by one or several rollers or cylinders (15) pivoted on the bending plate (12) or its mounting.

13. A device according to Claim 12, characterised in that the plane of the pressure surface (16) of the bending plate (12) intersects the body or bodies of the pre-bending element.

## Revendications

1. Procédé de façonnage à chaud d'une plaque (30) comprimée stratifiée en résine synthétique constituée par une pluralité de couches de stratification pouvant être conformées à chaud contenant une matière synthétique « duromère » et des matériaux de support de forme générale bidimensionnelle, cependant que des couches de liant thermoplastique sont intercalées entre lesdites couches de stratification, procédé qui consiste ensuite à porter d'abord ladite plaque (30) au moins dans sa zone à déformer, à la température de déformation qui est égale ou supérieure à la température de fusion du liant thermoplastique, et pour replier l'une des zones marginales (31) de la plaque plane et lui donner sa forme finale, à l'aide d'une plaque (12) de repliage guidée de façon mobile et maintenant le contact avec cette zone marginale (31) à courber la plaque autour d'une surface cylindrique (23) et à la refroidir de sorte que ladite plaque de pliage (12) au moins pendant une grande partie du processus de pliage se trouve en contact superficiel avec la zone marginale (31') à replier de ladite plaque et que les couches individuelles de stratification se déplacent les unes par rapport aux autres dans la zone de pliage et dans la zone marginale, en direction de la surface de la plaque, ladite plaque de pliage (12) maintenu au moins jusqu'à la solidification du liant thermoplastique, la zone marginale (31") dans sa position repliée, caractérisé en ce que pendant une dernière phase du processus de repliage, la plaque de pliage (12) est guidée constamment de façon telle que chaque point de sa surface de pliage (16) qui présente en direction du bord libre de ladite zone marginale repliée (31) une composante de déplacement parallèle au plan de ladite zone marginale repliée et en ce que, le cas échéant, l'on prévoit un organe de prépliage relié à la plaque de pliage (12), ledit organe de prépliage étant susceptible, pendant son déplacement lors de la première phase du processus de pliage, de s'appuyer contre la zone marginale à replier de la plaque à façonner (31) et dépréplier ainsi celle-ci.

2. Procédé selon la revendication 1, caractérisé en ce que le déplacement effectué pendant une dernière partie du processus de repliage par la plaque de pliage (12) est un déplacement de rotation.

3. Procédé selon la revendication 2, caractérisé en ce que ladite plaque de pliage (12) parcourt un angle de rotation compris entre 15 et 45° pendant son déplacement de rotation.

4. Procédé selon la revendication 2 ou 3, caractérisé en ce que pendant une phase initiale du déplacement de rotation, un déplacement de translation au moins sensiblement parallèle au plan de la zone marginale repliée (31') de la plaque est superposé audit déplacement de rotation.

5. Procédé selon l'une quelconque des revendications 2 à 4, caractérisé en ce que lors d'un repliage de ladite zone marginale (31) de la plaque d'environ 90°, ledit déplacement de rotation est effectué, au moins pendant une période terminale de celui-ci, autour d'un axe de rotation (32) dont la distance au plan de celle des surfaces de la partie non déformée de la plaque qui est reliée à la surface convexe de la partie repliée de la plaque, est inférieure à la moitié de la distance de ce plan à l'axe (24) de la surface de pliage, cependant que la distance du plan de la surface externe de la zone marginale repliée (31") de la plaque est supérieure au double de la distance entre ce plan et l'axe (24) de la surface de pliage.

6. Procédé selon l'une quelconque des revendications 1 à 5, caractérisé en ce que l'organe de prépliage est soumis, pendant son contact avec la partie marginale (31) de la plaque à replier, à un déplacement de translation dans une direction au moins sensiblement parallèle au plan de ladite zone marginale (31″) repliée de la plaque.

7. Dispositif pour plier des plaques, comportant un dispositif de serrage propre à immobiliser la plaque (30) non déformée et présentant des surfaces de serrage, l'une des surfaces de serrage plane étant reliée par une surface de pliage (23) éventuellement cylindrique à la surface de contre-pression (25) qui forme un angle avec cette surface de serrage, ledit dispositif comportant, en outre, une plaque de pliage (12) montée à rotation par des moyens de support et comportant un organe d'actionnement, ce dispositif se prêtant particulièrement à la mise en oeuvre du procédé selon l'une quelconque des revendications 1 à 6, caractérisé en ce qu'il comporte un traîneau ou chariot déplaçable de façon au moins sensiblement parallèle à la surface de contre-pression (25) et qui porte à rotation lesdits moyens de support de la plaque de pliage et en ce qu'il comporte également une pluralité d'organes d'actionnement pour déplacer le traîneau ou chariot et, le cas échéant, un dispositif de pression séparé pour pousser la plaque de pliage (12) sur la zone marginale (31″) repliée et plane de la plaque à façonner.

8. Dispositif selon la revendication 7, caractérisé en ce qu'un organe de prépliage est monté sur la plaque de pliage (12) ou sur les moyens de support qui lui sont associés, ledit organe de prépliage présentant, le cas échéant, la forme d'un corps cylindrique.

9. Dispositif selon la revendication 7 ou 8, caractérisé en ce que l'organe d'actionnement pour déplacer la plaque de pliage (12) est constitué par un dispositif d'actionnement hydraulique agissant sur ladite plaque de pliage (12) ou sur les moyens de support qui lui sont associés, pour imposer à ladite plaque de pliage (12) un déplacement de translation et/ou de rotation à l'encontre de la résistance opposée à ce déplacement par la zone marginale à replier (31) de la plaque.

10. Dispositif selon la revendication 9, caractérisé en ce qu'il comporte une butée (10) limitant le déplacement de translation du chariot et agencé de manière à agir avant l'achèvement du déplacement rotation.

11. Dispositif selon la revendication 9 ou 10, pour replier de 90° une zone marginale d'une plaque, comportant un organe de serrage déplaçable de façon au moins sensiblement parallèle à la surface de contre-pression et présentant l'une des surfaces de serrage, caractérisé en ce que le dispositif d'actionnement hydraulique (19) agissant sur ladite plaque de pliage (12) ou sur ses moyens de support, prend appui sur l'organe de serrage déplaçable.

12. Dispositif selon l'une quelconque des revendications 8 à 11, caractérisé en ce que l'organe de prépliage est constitué par un ou plusieurs rouleaux ou cylindres (15) montés à rotation sur la plaque de pliage (12) ou sur les moyens de support qui lui sont associés.

13. Dispositif selon la revendication 12, caractérisé en ce que le plan de la surface de pression (16) de la plaque de pliage (12) intersecte le ou les corps de l'organe de prépliage.

*Fig. 1*

Fig.2

Fig. 3

**Fig. 4**